# EUROPÄISCHE PATENTSCHRIFT

(11) **EP 0 332 973 B1**
(45) Veröffentlichungstag und Bekanntmachung des Hinweises auf die Patenterteilung: **09.06.1993**
(21) Anmeldenummer: 89103914.1
(22) Anmeldetag: 06.03.1989
(51) Int. Cl.: H02P 7/62

(54) **Pulsumrichterbetriebene elektrische Maschine**
Pulse converter-operated electric machine
Machine électrique à commande convertisseur à impulsions

(30) Priorität: 18.03.1988 DE 3809202
(43) Veröffentlichungstag der Anmeldung: 20.09.1989
(73) Patentinhaber: SIEMENS AKTIENGESELLSCHAFT, 80333 München (DE)
(72) Erfinder: Nerowski, Georg, Dr., D-8560 Lauf (DE); Piepenbreier, Bernhard, Dr., D-8551 Hemhofen (DE); Tölle, Hans-Jürgen, Dipl.-Ing., D-8520 Erlangen (DE)

(56) Entgegenhaltungen:
- DE-A- 3 616 221
- DE-B- 2 641 294
- DE-B- 2 745 824
- US-A- 3 611 085
- US-A- 3 624 472
- US-A- 4 536 692
- US-A- 4 573 003

## Beschreibung

Die Erfindung betrifft eine pulsumrichterbetriebene elektrische Maschine gemäß Oberbegriff des Anspruchs 1.

Eine derartige elektrische Maschine ist durch die DE-A-36 16 221 bekannt. Bei dieser elektrischen Maschine weisen die einzelnen Teilwicklungen eine gute magnetische Kopplung, also kleine Streuinduktivitäten auf. Eine möglichst gleichmäßige Taktung der zugehörigen Pulswechselrichter ist deshalb erforderlich.

Ein solcher Betrieb mit Aufteilung der Maschinenleistung auf mehrere kleinere Umrichter wird oftmals aus Redundanzforderungen der Vorzug gegeben, wobei die Taktung der einzelnen Umrichter mit dem Auftreten von Geräuschen und Pendelmomenten verbunden ist. Zur Verhinderung oder Beseitigung von unerwünschten Geräuschen oder Pendelmomenten werden bei Gleichstrommaschinen sogenannte "Saugdrosselschaltungen" angewendet. Dabei werden zwei gegenphasig gestaltete Gleichstromsteller an eine Saugdrossel angeschlossen, die über eine mittige Anzapfung die Ankerwicklung der Gleichstrommaschine speist. Der zusätzliche Mehraufwand an Volumen, Gewicht und Kosten für die Saugdrossel ist aber von Nachteil und oftmals nicht praxisgerecht.

Bei zwölfpulsigen Stromrichtermotoren (mit sechs Strängen) sind zwei um 30° el versetzte dreiphasige Wicklungen vorgesehen, die je von einem dreiphasigen Umrichter gespeist werden. Die höchstmögliche Strangzahl m wird dabei durch die noch ausführbare minimale Nutteilung τ_{N} in Abhängigkeit von der Polteilung τ_{P} gemäß der Beziehung τ_{N} = τ_{P}/m begrenzt.

Der Erfindung liegt die Aufgabe zugrunde, eine pulsumrichterbetriebene elektrische Maschine nach dem Oberbegriff des Anspruchs 1 zu schaffen, die ohne Saugdrosseln auskommt und nicht den einengenden Bedingungen für die erreichbaren Strangzahlen unterworfen ist.

Die Lösung der gestellten Aufgabe gelingt für eine Drehfeldmaschine mit einer Polpaarzahl p ≧ 2 durch die kennzeichnenden Merkmale des Anspruchs 1.

Bei einer als elektrisch oder permanentmagneterregte Synchronmaschine arbeitenden Drehfeldmaschine kann die Entkopplung der Teilstränge eines jeden Stranges durch die kennzeichnenden Merkmale des Anspruchs 2 unterstützt werden.

Zur Entkopplung der Teilstränge eines jeden Stranges, die jeweils von gesonderten Umrichtern gespeist werden, sind die betreffenden Teilstränge in einer zweigeteilten Maschine angeordnet oder die zusammengehörigen Polpaare sind abwechselnd mit den Teilsträngen bewickelt. Die weitgehende Entkopplung der Teilstränge erlaubt die getrennte Regelbarkeit der sie speisenden einzelnen Umrichter. Die Entkopplung der Teilstränge kann bei Synchronmaschinen durch eine geringere magnetische Leitfähigkeit in der Querachse als in der Längsache noch verbessert werden. Die Phasenverschiebung der Taktung der Umrichter für die n Teilstränge um den Winkel 2 π/n minimiert die Pendelmomente und Geräusche.

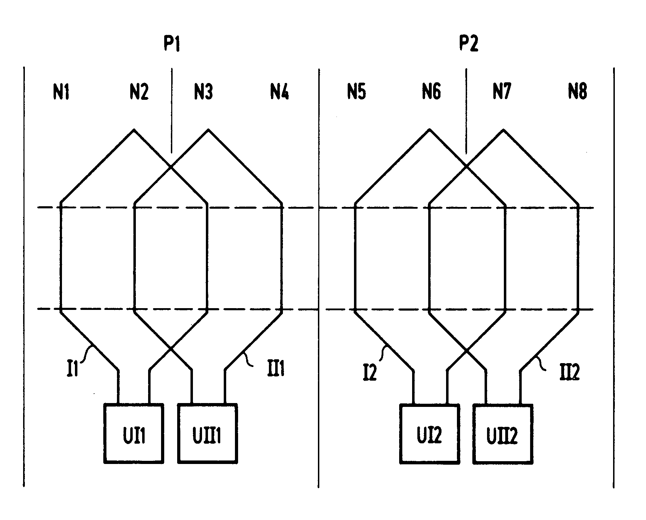

Ein Ausführungsbeispiel der Erfindung ist anhand der Zeichnung vereinfacht, d.h. einphasig dargestellt und näher erläutert und zwar für eine zweisträngige Maschine, mit zwei Polpaaren, bei der jeder Strang in zwei Teilstränge unterteilt und jeder Teilstrang von einem gesonderten Umrichter gespeist ist.

Jedem Polpaar P1,P2 sind vier Nuten (N1-N4 und N5-N8) zugeordnet für jeweils zwei verschiedenen Strängen I und II angehörende Teilstränge I1,II1 bzw. I2, II2, die von den Umrichtern UI1, UII1,UI2 und UII2 gespeist werden.

## Patentansprüche

1. Pulsumrichterbetriebene elektrische Drehfeldmaschine, die eine in mehrere Teilsträngen auftgeteilte Ständerwicklung aufweist, mit mehreren für die gleiche anteilmäßige Maschinen-Teilleistung bemessenen Umrichtern, die die Teilstränge speisen, **dadurch gekennzeichnet,** daß bei der Drehfeldmaschine mit einer Polpaarzahl p ≧ 2 jeder Strang in n ≧ 2 gleiche Teilstränge unterteilt und die einzelnen Teilstränge eines Stranges magnetisch gegeneinander weitgehend entkoppelt und jeweils an gesonderte Umrichter angeschlossen sind und daß die Taktung der Umrichter für die n Teilstränge gegeneinander um einen Winkel 2 π/n phasenverschoben erfolgt.

2. Maschine nach Anspruch 1 als elektrisch oder permanentmagneterregte Synchronmaschine,
**dadurch gekennzeichnet,** daß die magnetische Leitfähigkeit der Synchronmaschine in der Querachse kleiner als in der Längsachse bemessen ist.

3. Maschine nach Anspruch 1 oder 2, **dadurch gekennzeichnet,** daß die einzelnen Stränge (I,II) jeweils in zwei Teilstränge (I1,I2; II1,II2) unterteilt sind.

4. Maschine nach Anspruch 1 oder 2, **dadurch gekennzeichnet,** daß die zusammengehörigen Polpaare jeweils abwechselnd mit den Teilsträngen eines Stranges bewickelt sind.

## Claims

1. Electrical polyphase machine driven by a pulse-controlled a.c. converter and having a stator winding divided into several phase sections, with several converters of equal rating combined to provide the total rated capacity of the machine and supplying the phase sections, characterised in that, with the polyphase machine having a number of pole pairs p≧2, each phase is subdivided into n≧2 matched phase sections and the individual phase sections of a phase are substantially magnetically decoupled from each other and are respectively connected to separate converters, and in that the clocking of the converters for the n phase sections takes place out of phase by an angle of 2π/n relative to each other.

2. Machine according to claim 1 as a synchronous machine energised electrically or by permanent magnets, characterised in that the rating of the magnetic conductivity of the synchronous machine along its transverse axis is less than along its longitudinal axis.

3. Machine according to claim 1 or 2, characterised in that the individual phases (I, II) are each subdivided into two phase sections (I1, I2; II1, II2).

4. Machine according to claim 1 or 2, characterised in that the pole pairs belonging together are each wound alternately with the phase sections of a phase.

## Revendications

1. Machine électrique à champ tournant commandée par un convertisseur d'impulsions, qui possède un enroulement statorique subdivisé en plusieurs faisceaux partiels et qui comporte plusieurs convertisseurs d'impulsions qui sont dimensionnés pour le même pourcentage de puissance partielle de la machine et qui alimentent les faisceaux partiels, caractérisée par le fait que dans le cas de la machine à champ tournant comportant un nombre de paires de pôles p ≧ 2, chaque faisceau est subdivisé en n ≧ 2 faisceaux partiels identiques et les différents faisceaux partiels d'un faisceau sont dans une large mesure découplés magnétiquement les uns par rapport aux autres et sont raccordés respectivement à des convertisseurs particuliers et que la commande cadencée des convertisseurs pour les n faisceaux partiels s'effectue avec un déphasage réciproque correspondant à un angle de 2π/n.

2. Machine suivant la revendication 1 utilisée en tant que machine synchrone excitée électriquement ou par des aimants permanents,
caractérisée par le fait que la conductivité magnétique de la machine synchrone est réglée à une valeur plus faible sur l'axe transversal que sur l'axe longitudinal.

3. Machine suivant la revendication 1 ou 2, caractérisée par le fait que les différents faisceaux (I, II) sont subdivisés respectivement en deux faisceaux partiels (I1, I2; II1, II2).

4. Machine suivant la revendication 1 ou 2, caractérisée par le fait que les paires de pôles associés sont respectivement bobinés en alternance avec les faisceaux partiels d'un faisceau.
